# EUROPÄISCHE PATENTSCHRIFT

(11) **EP 3 691 459 B1**
(45) Veröffentlichungstag und Bekanntmachung des Hinweises auf die Patenterteilung: **29.07.2026**
(21) Anmeldenummer: 18785294.2
(22) Anmeldetag: 04.10.2018
(51) Int. Cl.: A23F 3/06, A23F 3/34, A23F 3/12, A24B 3/18, A24B 15/22, A24B 15/20, A23F 3/08

(54) **VERFAHREN ZUM BEHANDELN VON PFLANZENBLÄTTERN UND VERFAHREN ZUM HERSTELLEN EINES FERMENTIERTEN PRODUKTES AUS GEPFLÜCKTEN PFLANZENBLÄTTERN UMFASSEND EIN KONDITIONIEREN DER PFLANZENBLÄTTER DURCH ANLEGEN EINES ELEKTRISCHEN FELDES**
METHOD FOR PROCESSING PLANT LEAVES AND METHOD FOR PRODUCING A FERMENTED PRODUCT FROM PLUCKED PLANT LEAVES, COMPRISING CONDITIONING THE PLANT LEAVES BY APPLYING AN ELECTRIC FIELD
PROCÉDÉ DE TRAITEMENT DE FEUILLES DE PLANTE ET PROCÉDÉ DE FABRICATION D'UN PRODUIT FERMENTÉ À PARTIR DE FEUILLES DE PLANTE CUEILLIES, COMPRENANT UN CONDITIONNEMENT DES FEUILLES DE PLANTE PAR APPLICATION D'UN CHAMP ÉLECTRIQUE

(30) Priorität: 04.10.2017 DE 102017217623
(43) Veröffentlichungstag der Anmeldung: 12.08.2020
(73) Patentinhaber: Elea Service GmbH, 49610 Quakenbrück (DE)
(72) Erfinder: OSTERMEIER, Robin, 49090 Osnabrück (DE); TOEPFL, Stefan, 49076 Osnabrück (DE); WITT, Julian, 49078 Osnabrück (DE)
(74) Vertreter: Grünecker Patent- und Rechtsanwälte PartG mbB
(86) Internationale Anmeldenummer: PCT/EP2018/076982
(87) Internationale Veröffentlichungsnummer: WO 2019/068801

(56) Entgegenhaltungen:
- CN-A- 103 859 079
- CN-A- 107 212 110
- CN-B- 103 535 451
- RU-C1- 2 553 217
- ANONYMOUS: "Pu'er tea - Wikipedia", 8 September 2017 (2017-09-08), XP055536442, Retrieved from the Internet <URL:https://en.wikipedia.org/w/index.php?title=Pu'er_tea&oldid=799612377> [retrieved on 20181219]
- A. ZDERIC ET AL: "Breakage of cellular tissue by pulsed electric field : extraction of polyphenols from fresh tea leaves", CHEMICAL ENGINEERING TRANSACTIONS, 5 June 2013 (2013-06-05), pages 1795 - 1800, XP055536499, Retrieved from the Internet <URL:https://pure.tue.nl/ws/portalfiles/portal/22301509/breakage.pdf> [retrieved on 20181219], DOI: 10.3303/CET1332300
- MUSTAFA FINCAN: "Extractability of phenolics from spearmint treated with pulsed electric field", JOURNAL OF FOOD ENGINEERING, vol. 162, 14 April 2015 (2015-04-14), GB, pages 31 - 37, XP055536484, ISSN: 0260-8774, DOI: 10.1016/j.jfoodeng.2015.04.004
- FRANCISCO J. BARBA ET AL: "Current applications and new opportunities for the use of pulsed electric fields in food science and industry", FOOD RESEARCH INTERNATIONAL, vol. 77, November 2015 (2015-11-01), AMSTERDAM, NL, pages 773 - 798, XP055536480, ISSN: 0963-9969, DOI: 10.1016/j.foodres.2015.09.015

## Beschreibung

Die vorliegende Erfindung betrifft ein Verfahren zum Behandeln von Pflanzenblättern, beispielsweise von Tee- oder Tabakblättern, insbesondere im Rahmen des Herstellens eines fermentierten Produktes sowie Pflanzenblätter, die mittels dieses Verfahrens hergestellt sind. Das Verfahren umfasst die Schritte: ein Welken der Pflanzenblätter, und ein mechanisches Zellaufschlussverfahren der Pflanzenblätter.

Die Erfindung betrifft ferner ein Verfahren zum Herstellen eines fermentierten Produktes aus gepflückten Pflanzenblättern, beispielsweise eines Teeproduktes oder Tabakproduktes, umfassend die Schritte: optional ein Fermentieren der Pflanzenblätter und Trocknen der Pflanzenblätter.

Aus Pflanzenblättern werden eine Reihe von fermentierten Produkten hergestellt, beispielsweise Tee- und Tabakprodukte, oder Kräuter und Gewürze.

Aus der Tabakpflanze, insbesondere deren Blätter werden eine Vielzahl von Produkten wie Rauch- oder Schnupftabak sowie Konzentrate und Extrakte für den Einsatz in E-Zigaretten, Verdampfern und ähnlichen Produkten hergestellt.

Aus der Teepflanze (*Camellia sinensis*), insbesondere deren Blätter werden eine Vielzahl von Teeprodukten hergestellt, beispielsweise Blatttee, Teegetränke, Konzentrate oder ein getrocknetes Pulver, das aus einem Teeblattextrakt oder einem Teegetränk erzeugt ist.

Blatttee kann als grüner Blatttee oder schwarzer Blatttee hergestellt werden. Um schwarzen Blatttee herzustellen, werden frische Blätter der Teepflanze gewelkt, also einer sanften Trocknung unterzogen, dann zerkleinert, fermentiert und anschließend getrocknet. Bei der Fermentation werden Enzyme im Teeblatt atmosphärischem Sauerstoff ausgesetzt, um verschiedene Substanzen zu oxidieren und ein braun gefärbtes Produkt herzustellen. Grüner Blatttee wird dem Fermentationsprozess nicht ausgesetzt. Es kann auch eine teilweise Fermentation verwendet werden, um einen Tee-Zwischentyp herzustellen, welcher als "Oolong"-Tee bekannt ist.

Bei der Herstellung von Tee, insbesondere schwarzem Tee, werden die fermentativen Enzyme und ihre Substrate innerhalb der Blätter freigesetzt. Dies geschieht auf mechanischem Wege, wozu man zwei Hauptverfahren unterscheidet.

Die erste, sogenannte "orthodoxe Herstellung" umfasst ein Rollen von gewelkten Teeblättern vor dem Fermentationsschritt. Beim Rollen werden mit Hilfe von Pressspindeln oder Rollwalzen die Blätter aufgebrochen, so dass Zellsaft austritt.

Das zweite Verfahren ist das CTC (Cut-Tear-Curl) (Schneiden-Reißen-Rollen), bei welchem die Teeblätter nach dem Welken in einem Arbeitsgang zerbrochen, zerrissen und gerollt werden. Das dabei entstehende fein geschnittene Produkt zeichnet sich durch eine schnelle Aufgussgeschwindigkeit und starke Farbe aus.

Aus der CN 107 212 110 A ist ein Verfahren zur Herstellung von duftendem Tieguanyin-Tee bekannt.

A. Zderic ET AL: "Breakage of cellular tissue by pulsed electric field : extraction of polyphenols from fresh tea leaves",Chemical Engineering Transactions, 5. Juni 2013, CN103859079A und CN103535451B offenbaren ein Verfahren zum Behandeln von Teeblättern, wobei die Teeblätter durch Anlegen eines gepulstes elektrisches Feldes konditioniert werden.

RU2553217C1 offenbart ein Verfahren zum Fermentierung von Zuckerbeten Blätter, wobei die Blätter durch Anlegen eines gepulstes elektrisches Feldes konditioniert werden.

MUSTAFA FINCAN: "Extractability of phenolics from spearmint treated with pulsed electric field",JOURNAL OF FOOD ENGINEERING, Bd. 162, 14. April 2015 offenbart ein Verfahren zum Behandeln von Minzenblätter, wobei die Blätter durch Anlegen eines elektrisches Feldes konditioniert werden

Im Sinne dieser Anmeldung umfasst der Behandlungsschritt des Rollens sowohl die orthodoxe Herstellung als auch das CTC-Verfahren.

Das Teeherstellungsverfahren ist grundsätzlich sehr zeit-, energie- und kostenaufwändig.

Der Welkprozess kann bis zu 24 Stunden dauern. Zwar kann man das Welken beschleunigen, indem die gepflückten Teeblätter mit Ventilatoren belüftet und gegebenenfalls erwärmt werden, wodurch sich die Welkdauer verkürzen kann, allerdings nur unter erheblichem Energieverbrauch.

Auch die Verfahrensschritte des Rollens, Fermentierens und Trocknens erfordern einen nicht unerheblichen Zeit- und Energieaufwand. Gleiches gilt für die Herstellung von Tabakprodukten. Es ist daher die Aufgabe der vorliegenden Erfindung, ein Verfahren zum Behandeln von Pflanzenblättern bzw. ein Verfahren zum Herstellen eines fermentierten Produktes aus gepflückten Pflanzenblättern bereitzustellen, welches den Zeit-, Kosten- und Energieaufwand des herkömmlichen Verfahrens verringert.

Diese Aufgabe wird erfindungsgemäß durch ein Verfahren zum Behandeln von Pflanzenblättern, insbesondere im Rahmen des Herstellens eines fermentierten Produktes gelöst, bei dem die Pflanzenblätter durch Anlegen eines nicht-thermischen elektrischen Feldes vor und/oder während dem Schritt des Welkens konditioniert werden. Das eingangs genannte Verfahren zum Herstellen eines fermentierten Produktes aus gepflückten Pflanzenblättern löst diese Aufgabe dadurch, dass die Pflanzenblätter ferner gemäß dem erfindungsgemäßen Verfahren zum Behandeln von Pflanzenblättern, also durch Anlegen eines nicht-thermischen elektrischen Feldes vor und/oder während dem Schritt des Welkens konditioniert werden.

Die vorliegende Erfindung hat überraschenderweise aufgezeigt, dass ein Konditionieren der Pflanzenblätter durch Anlegen eines elektrischen Feldes dazu führt, dass der Welkprozess beschleunigt werden kann und der Oxidationsgrad und somit die Farbe, aber auch der Geschmack und das Aroma des Produktes gesteuert werden können. Zusätzlich wurde erstaunlicherweise beobachtet, dass der Zeit- und Energieaufwand für die nachfolgenden Produktionsschritte signifikant reduziert werden kann.

Die Erfindung kann mit den folgenden, jeweils für sich vorteilhaften und beliebig miteinander kombinierbaren Weiterentwicklungen und vorteilhaften Ausgestaltungen weiter verbessert werden.

Gemäß einer Ausführungsform können die Pflanzenblätter Teeblätter, Tabakblätter, Kräuterblätter oder Gewürzblätter sein. Das hergestellte Produkt wäre dann ein Teeprodukt, ein Tabakprodukt, ein Kräuterprodukt oder ein Gewürzprodukt.

Gemäß einer Ausführungsform kann beim Konditionieren ein gepulstes elektrisches Feld angelegt werden, was einen Zellaufschluss bewirkt. Es findet also eine Elektroporation statt, bei welcher durch Anlegen eines elektrischen Feldes, insbesondere eines gepulsten elektrischen Feldes, die Semipermeabilität der Zellmembran der Pflanzenzellen aufgehoben wird. Die Aufhebung der Semipermeabilität und der damit verbundene Zellaufschluss verbessert den Massentransport innerhalb der Zellstrukturen. Die Semipermeabilität der Zellmembran kann reversibel oder irreversibel aufgehoben werden, wobei eine irreversible Elektroporation bevorzugt ist, weil die dauerhafte Aufhebung der Semipermeabilität mehr Flexibilität bei der Abfolge der Verfahrensschritte lässt.

Das Konditionieren durch Anlegen eines gepulsten elektrischen Feldes, im Folgenden auch PEF (Pulsed-Electric-Field), induziert den Zellaufschluss, was ein schnelleres Welken und Erweichen der Pflanzenblätter, beispielsweise Tee- oder Tabakblätter zur Folge hat. Ferner begünstigt ein PEF-induzierter Zellaufschluss die Freisetzung endogener Enzyme aus den Zellen der Pflanzenblätter, was die Fermentation, also die enzymatische Oxidation beschleunigt. Es werden beispielsweise für die Farbbildung relevante Polyphenole sowie eine Hydrolyse von Blattproteinen in Peptide und Aminosäure, die für die Geschmacksbildung relevant sind, durch das erfindungsgemäße Konditionieren begünstigt.

Durch ein erfindungsgemäßes Konditionieren kann ferner ein vorbestimmter Aufschlussgrad der Pflanzenblätter eingestellt werden. Durch eine erfindungsgemäß PEF-Behandlung ist somit die gezielte Beeinflussung des Zellaufschlusses und die Aktivität endogener Enzyme möglich, so dass geringere Fermentations- und Oxidationszeiten erreicht werden können und ein erwünschter Oxidationsgrad, beispielsweise von 5% bis 100%, kontrolliert auf schnelle und energieeffiziente Weise eingestellt werden kann.

Gemäß einer weiteren Ausführungsform kann der Schritt des Konditionierens den Schritt des Welkens teilweise ersetzen und/oder den Schritt des Rollens ganz oder teilweise ersetzen. Die erfindungsgemäße Konditionierung erzielt einen Zellaufschluss, der mechanischen Zellaufschlussverfahren, wie Zerkleinern, Tumbeln, Brechen oder Rollen zumindest teilweise ersetzen kann und damit Zeit und Energie einspart. Zudem hat sich überraschenderweise herausgestellt, dass eine PEF-Behandlung bei anschließendem Rollen der Pflanzenblätter, welches auch der Formgebung dient, eine verringerte Bruchneigung bewirkt, so dass das erfindungsgemäße Verfahren die Produktqualität verbessert.

Beim Konditionieren kann einen Energieeintrag von wenigstens 0,1 kJ/kg, vorzugsweise einen Energieeintrag von 0,1 kJ/kg bis 10 kJ/kg und besonders bevorzugt von 0,5 bis 3 kJ/kg in die Pflanzenblätter erfolgen. Ein Energieeintrag in dieser Größenordnung ist gut geeignet, um die irreversible Elektroporation durchzuführen und einen Zellaufschluss im Rahmen der Konditionierung zu erzielen.

Es hat sich zudem gezeigt, dass es vorteilhaft ist, wenn ein elektrisches Feld von 0,1 kV/cm bis 10 kV/cm, vorzugsweise von 0,5 kV/cm bis 2 kV/cm angelegt wird. Derartige Feldstärken lassen sich mit handelsüblichen industriellen Kondensatoren erzielen, und vermeiden, dass unerwünschte thermische Effekte beim Konditionieren der Pflanzenblätter auftreten, die zu nicht erwünschten Änderungen der Pflanzenblätter führen.

Das elektrische Feld, insbesondere die elektrischen Pulse können sowohl über Direktkontakt des Kondensators bzw. dessen Elektroden mit den Pflanzenblättern, als auch über leitende Fluide erzeugt werden, wobei die Pflanzenblätter ganz oder teilweise in die leitenden Fluide eingelegt sind. Dabei können verschiedene Elektrodenformen zur Anwendung kommen, beispielsweise Platten-, Ring-, Gitter-, Hohl- oder Durchflusselektroden.

Die Konditionierung kann sowohl im Batch- als auch im kontinuierlichen Betrieb erfolgen. Die kontinuierliche Konditionierung kann beispielsweise im Wasserbad unter Einsatz von Förderbändern für den Transport der Pflanzenblätter oder, um die Wasserzugabe zu reduzieren, durch den Einsatz einer Transportschnecke mit eingebrachtem Elektrodensystem erfolgen.

Als Impulsgenerator kann beispielsweise ein Hochspannungsimpulsgenerator eingesetzt werden, der elektrische Felder in Form von kurzen Pulsen im Mikro- bis Millisekundenbereich einer hohen Spannung im Kilovoltbereich erzeugt. Marx-Generatoren können als Hochspannungsimpulsgeneratoren eingesetzt werden.

Im Sinne einer Zeit- und Energieoptimierung können die Pflanzenblätter mit wenigstens 10 elektrischen Pulsen, vorzugsweise 10 bis 200 elektrischen Pulsen und besonders bevorzugt 30 bis 50 elektrischen Pulsen konditioniert werden.

Das angelegte elektrische Feld ist ein nicht-thermisch wirkendes elektrisches Feld, bei dem die Energieobergrenze so bemessen ist, dass im Wesentlichen keine Erwärmung des Nahrungsmittels im Sinne einer Ohmschen Erhitzung stattfindet. Auf diese Weise kann das erfindungsgemäße Verfahren die Pflanzenblätter beim Konditionieren nicht-thermisch, und auch nichtmechanisch aufschließen und die Pflanzenblätter für einen anschließenden Verarbeitungsschritt des Welkens, Rollens, Fermentierens und/oder Trocknens vorbereiten.

Bei einer Ausführungsform des erfindungsgemäßen Verfahrens zum Herstellen eines fermentierten Produktes aus gepflückten Pflanzenblättern können die Pflanzenblätter weniger als 8 Stunden welken, insbesondere wenn die Pflanzenblätter vor dem Welken konditioniert werden, was eine erheblichen Zeit- und Energiereduktion im Vergleich zu herkömmlichen Verfahren darstellt.

Gemäß einer weiteren Ausführungsform können die Pflanzenblätter weniger als 30 Minuten, vorzugsweise weniger als 15 Minuten und besonders bevorzugt weniger als 10 Minuten gerollt werden, insbesondere wenn die Pflanzenblätter entweder vor dem Welken und/oder vor dem Rollen konditioniert werden.

Gemäß einer weiteren Ausführungsform können die Pflanzenblätter weniger als 60 Minuten, vorzugsweise weniger als 40 Minuten und besonders bevorzugt weniger als 20 Minuten fermentiert werden, insbesondere wenn die Pflanzenblätter vor dem Welken und/oder vor dem Rollen und/oder vor dem Fermentieren konditioniert werden. Gemäß einer Ausführungsform kann das Fermentieren während der sich an das Konditionieren anschließenden Schritte, insbesondere während des Rollens und/oder während des Trocknens stattfinden. Bei dieser Ausführungsform kann ein separater Fermentationsschritt weggelassen werden.

Gemäß einer weiteren Ausführungsform können die Pflanzenblätter weniger als 30 Minuten, vorzugsweise weniger als 15 Minuten und besonders bevorzugt weniger als 10 Minuten getrocknet werden, insbesondere wenn die Pflanzenblätter vor dem Welken und/oder vor dem Rollen und/oder vor dem Fermentieren und/oder vor dem Trocknen konditioniert werden.

Im Folgenden wird die Erfindung anhand vorteilhafter Ausgestaltungen mit Bezug auf die Zeichnungen und nachfolgenden Versuchsbeispiele beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigen:
- Fig. 1: ein Fließschema der Verfahrensschritte bei der Behandlung von gepflückten Teeblättern im Rahmen des Herstellens eines Teeproduktes;
- Fig. 2: ein Fließschema einer Ausführungsform eines erfindungsgemäßen Verfahrens;
- Fig. 3: ein Fließdiagramm eines anderen Beispiels, das nicht Teil der Erfindung ist;
- Fig. 4: ein Fließdiagramm einer zweiten Ausführungsform des erfindungsgemäßen Verfahrens;
- Fig. 5: die Farbänderung von Melisseblättern (oben) und Minzblättern (unten) in Abhängigkeit des Energieeintrags beim erfindungsgemäßen Konditionieren;
- Fig. 6: die Farbänderung eines Minzblattextraktes in Abhängigkeit des Energieeintrags (W) beim Konditionieren; und
- Fig. 7: den Farbunterschied eines unkonditionierten Teeblattextraktes (U) und eines erfindungsgemäß konditionierten Teeblatt-Extraktes (PEF).

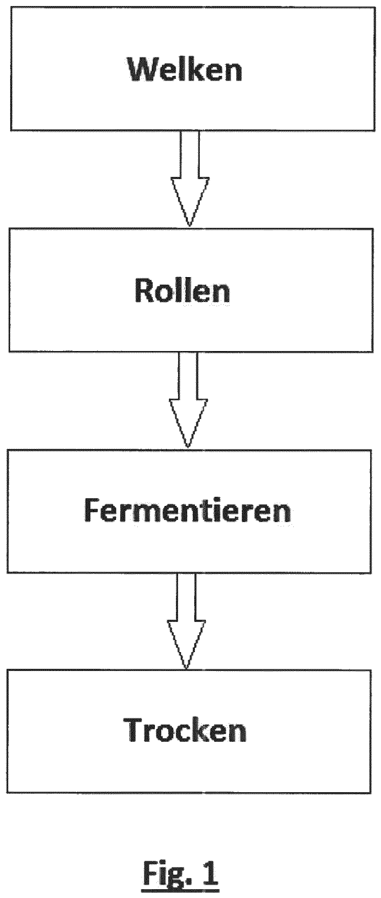

Nachfolgend wird zunächst ein konventionelles Verfahren zum Behandeln von Teeblättern bzw. zum Herstellen eines Teeproduktes aus gepflückten Teeblättern unter Bezugnahme auf das Fließschema der Fig. 1 vorgestellt. Die konventionellen Verfahren zur Herstellung von Tabakprodukten sind sehr ähnlich. Nachfolgend wird die vorliegende Erfindung beispielhaft für die Behandlung von Teeblättern erläutert.

Das Fließdiagramm der Fig. 1 skizziert die Abfolge der Verfahrensschritte am Beispiel einer traditionellen Produktion von Schwarztee.

Nach dem Pflücken durchlaufen die Teeblätter die folgenden Behandlungsstufen: Welken, Rollen, Fermentieren und Trocknen.

Bei Schritt des Welkens wird den gepflückten Teeblättern Feuchtigkeit entzogen, um sie zu erweichen. Beim konventionellen Welken werden die Teeblätter Temperaturen von etwa 20 °C für eine Dauer von 18 bis 24 Stunden ausgesetzt.

An das Welken schließt sich der Behandlungsschritt des Rollens an. Rollen im Sinne der vorliegenden Erfindung umfasst sowohl die eingangs orthodoxe Methode, bei welcher mit Hilfe von Pressspindeln oder Rollwalzen die Blätter aufgebrochen werden, damit der austretende Zellsaft sich mit dem Sauerstoff der Luft verbindet. Aber auch die CTC-Behandlung, bei welcher das Blattgut zunächst gebrochen, anschließend zerrissen und abschließend gerollt wird, ist unter "Rollen" im Sinne der vorliegenden Erfindung zu fassen. Das konventionelle Rollen dauert in der Regel mindestens 30 Minuten.

Beim Schwarztee werden die gerollten Teeblätter fermentiert. Das Fermentieren von Tee ist ein Oxidationsprozess, bei welchem bei erhöhter Luftfeuchtigkeit und oftmals über Raumtemperatur (21 °C) liegenden Temperaturen Oxidations- und Gärungsprozesse in Gang gesetzt werden, wodurch die Teeblätter des Schwarztees ihre kupferrote bis braune Färbung annehmen und die für sie charakteristischen Aromen entfalten.

Die Fermentation wird gestoppt, indem das Blattgut bei hohen Temperaturen von über 80 °C für 20 Minuten oder länger getrocknet wird.

An das Trocknen können sich noch weitere Verfahrensschritte, beispielsweise ein Sieben, Sortieren und/oder Mischen von Teeblättern anschließen.

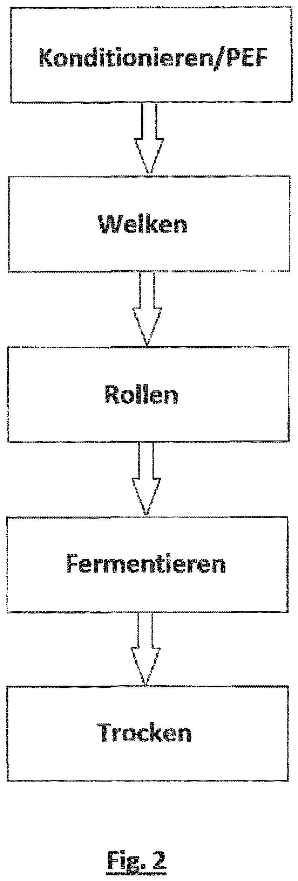

Das erfindungsgemäße Verfahren gemäß einer ersten Ausführungsform, welches im Fließdiagramm der Fig. 2 gezeigt ist, zeichnete sich dadurch aus, dass die Teeblätter durch Anlegen eines elektrischen Feldes vor dem Welken konditioniert werden.

Zum Konditionieren kann beispielsweise ein elektrisches Feld von 0,1 kV/cm bis 10 kV/cm angelegt werden, wobei wenigstens 10 elektrische Pulse, vorzugsweise 10 bis 200 elektrische Pulse und besonders bevorzugt 30 bis 50 elektrische Pulse in die Teeblätter eingebracht werden können, was beim Konditionieren einen Energieeintrag von beispielsweise 0,1 kJ/kg bis 10 kJ/kg in die Teeblätter entspricht.

Gemäß einer Ausführungsform kann das Konditionieren im Rahmen eines PEF-Verfahrens erfolgen, bei welchem ein gepulstes elektrisches Feld angelegt wird, was einen Zellaufschluss bewirkt. Beim Konditionieren kann auf diese Weise ein vorbestimmter Aufschlussgrad der Teeblätter eingestellt und auf diese Weise der Oxidationsgrad der Teeblätter im Rahmen der anschließenden Fermentation gesteuert bzw. die Behandlungsdauer und die Behandlungstemperaturen in den anschließenden Behandlungsstufen Welken, Rollen, Fermentieren und/oder Trocknen reduziert werden.

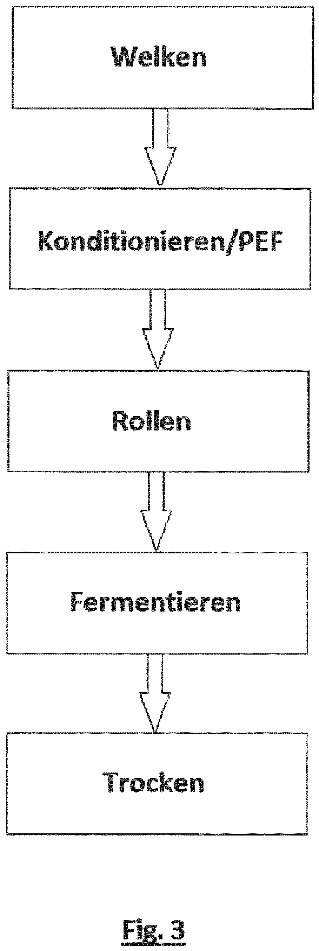

Eine Beispiel für ein anderes Verfahrens, das nicht Teil der Erfindung ist, ist im Fließschema der Fig. 3 dargestellt.

Das beispielhafte Verfahren der Fig. 3 entspricht im Wesentlichen dem Verfahren der ersten Ausführungsform aus Fig. 3, unterscheidet sich allerdings dadurch, dass beim Beispiel aus Fig. 3 der Schritt des Konditionierens der Teeblätter nicht vor, sondern nach dem Schritt des Welkens und vor dem Schritt des Rollens stattfindet.

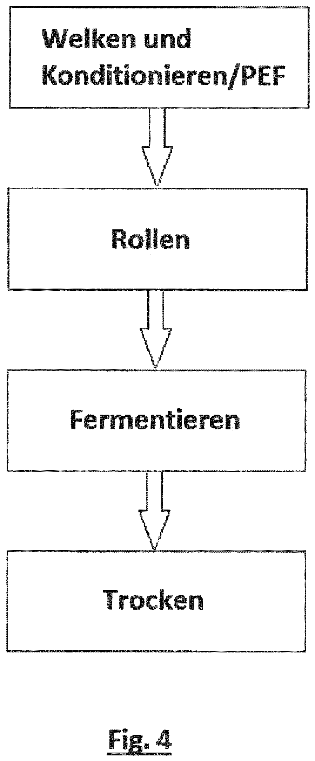

Im Fließschema der Fig. 4 ist eine beispielhafte zweite Ausführungsform eines erfindungsgemäßen Verfahrens gezeigt.

Das Verfahren der zweiten Ausführungsform zeichnet sich dadurch aus, dass die Teeblätter durch Anlegen eines elektrischen Feldes während des Welkens konditioniert werden.

Es ist genauso gut denkbar, die Teeblätter während des Rollens, oder während bzw. vor einer beliebigen Behandlungsstufe vor dem Trocknen vorzunehmen.

Auch ein mehrfaches Konditionieren durch Anlegen eines elektrischen Feldes, um die Teeblätter gezielt für die anschließende Behandlungsstufe vorzubereiten, ist denkbar.

### Versuchsbeispiele

Nachfolgend werden beispielhafte Versuche präsentiert, die belegen, dass das erfindungsgemäße Verfahren in vorteilhafter Weise zu verbesserten Pflanzenblattprodukten führt.

### Versuchsbeispiel 1

In einem ersten Versuch wurden Kräuterblätter als Pflanzenblätter mit unterschiedlich hohem Energieeintrag konditioniert. Im Versuchsbeispiel 1 wurden Melisseblätter und Minzblätter konditioniert.

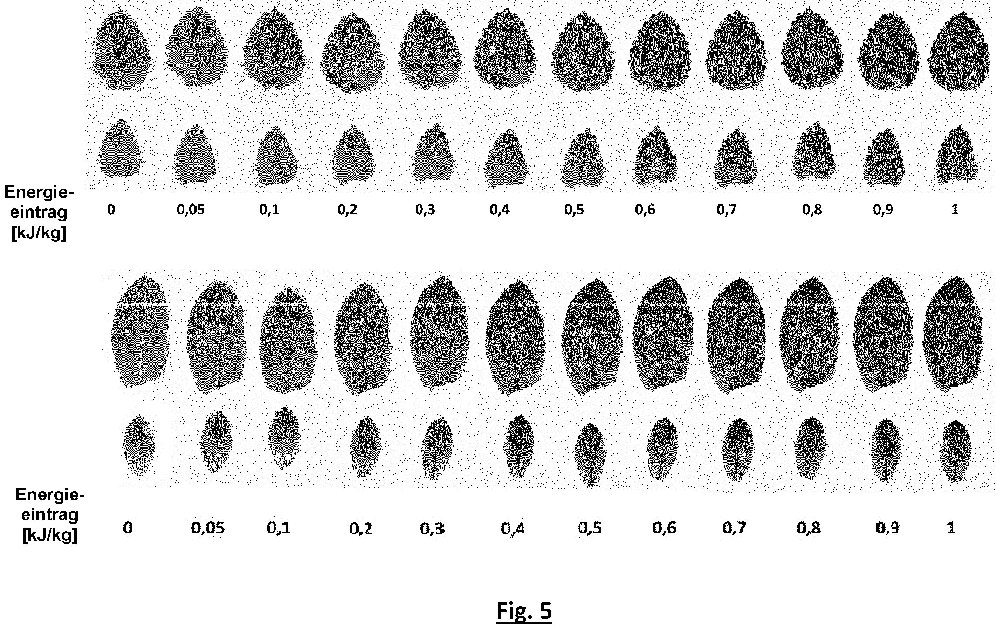

Die Fig. 5 zeigt die Farbänderung in Abhängigkeit vom Energieeintrag.

Wie in Fig. 5 zu erkennen ist, werden die Pflanzenblätter umso dunkler, je höher der Energieeintrag ist. Dies hängt mit der enzymatischen (Bräunung) Oxidation zusammen, wenn die intra- und extrazellulären Bestandteile mit Sauerstoff reagieren. Der vorliegende Versuch zeigt, dass das erfindungsgemäße Verfahren zum Behandeln von Pflanzenblättern diesen Bräunungsprozess beschleunigt, wobei bemerkenswert ist, dass die enzymatische Bräunung bereits bei sehr geringem Energieeintrag von 0,05 bis 0,1 kJ/kg einsetzt. Derselbe Effekt konnte für eine Reihe anderer Pflanzenblätter, beispielweise für Teeblätter gezeigt werden.

Es hat sich also überraschenderweise herausgestellt, dass das erfindungsgemäße Verfahren zum Behandeln von Pflanzenblättern eine Beschleunigung des enzymatischen Oxidationsprozesses bewirkt

### Versuchsbeispiel 2

In einem weiteren Versuch wurden erfindungsgemäß behandelte, fermentierte und getrocknete Pflanzenblätter (Melisseblätter, Minzblätter und Teeblätter) in kochendem Wasser extrahiert. Dazu wurden jeweils 1 g erfindungsgemäß behandelter Blätter von Melisse, Minze und Tee, in einen Teebeutel überführt und in einem Messbecher mit 50 g kochenden Wassers (100°C) für 10 Minuten extrahiert. Nach dem Extraktionsprozess wurden die erhaltenen Proben untersucht und verglichen.

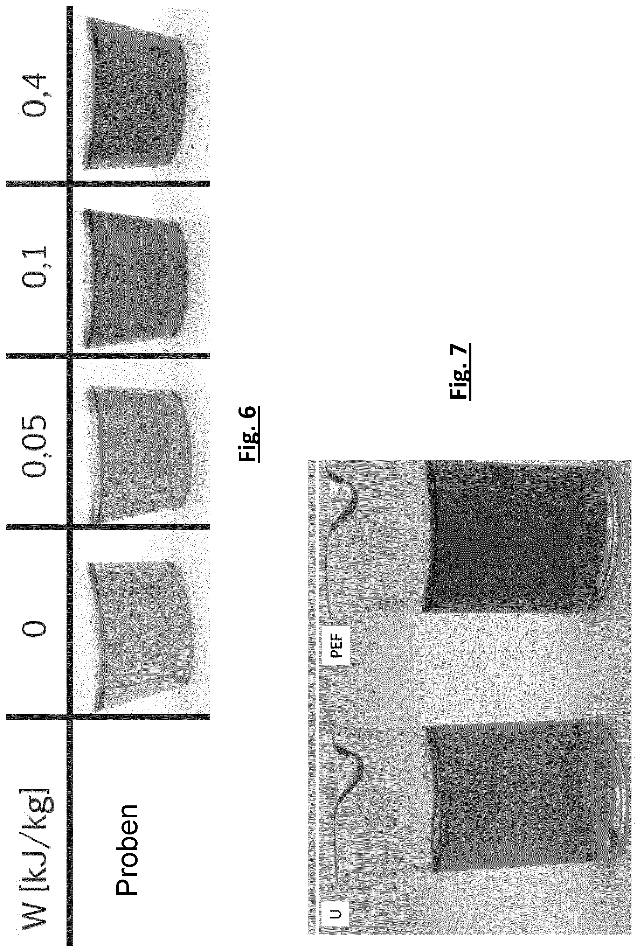

Die Versuchsergebnisse sind als Farbunterschiede von getrockneten Minzblättern in Abhängigkeit vom Energieeintrag in Fig. 6 zu sehen.

Fig. 7 stellt den Farbunterschied von unbehandelten und erfindungsgemäß behandelten fermentierten Teeblättern dar.

Die Fig. 6 und 7 zeigen, dass das erfindungsgemäße Verfahren die Extraktion von farb- und geschmacksgebenden Inhaltsstoffen aus den Pflanzenblättern beschleunigt, was sich in einer stärkeren Bräunung des Pflanzenblattextraktes niederschlägt.

Je höher der spezifische Energieeintrag, umso besser lassen sich die Inhaltsstoffe des Teeblattproduktes extrahieren.

Die visuellen Ergebnisse wurden auch bei einem sensorischen Geschmackstest bestätigt, der aufgezeigt hat, dass ein erfindungsgemäßes Konditionieren zu einem intensiveren Geschmack des Pflanzenblattextraktes führt. Je höher der spezifische Energieeintrag, umso intensiver der Geschmack des Pflanzenblattproduktes.

Je höher der spezifische Energieeintrag, umso besser lassen sich die Inhaltsstoffe des Teeblattproduktes extrahieren.

Die visuellen Ergebnisse wurden auch bei einem sensorischen Geschmackstest bestätigt, der aufgezeigt hat, dass ein erfindungsgemäßes Konditionieren zu einem intensiveren Geschmack des Pflanzenblattextraktes führt. Je höher der spezifische Energieeintrag, umso intensiver der Geschmack des Pflanzenblattproduktes.

## Patentansprüche

1. Verfahren zum Behandeln von Pflanzenblättern, insbesondere im Rahmen des Herstellens eines fermentierten Produktes, umfassend die Schritte:
- ein Welken der Pflanzenblätter, und
- ein mechanisches Zellaufschlussverfahren der Pflanzenblätter,
wobei die Pflanzenblätter durch Anlegen eines nicht-thermischen elektrischen Feldes vor und/oder während dem Schritt des Welkens konditioniert werden.

2. Verfahren gemäß Anspruch 1, wobei die Pflanzenblätter Teeblätter, Gewürzblätter, Kräuterblätter oder Tabakblätter sind.

3. Verfahren gemäß Anspruch 1 oder 2, wobei beim Konditionieren ein elektrisches Feld von 0,1 kV/cm bis 10 kV/cm angelegt wird und/oder wobei ein Energieeintrag von 0,1 kJ/kg bis 10 kJ/kg in die Pflanzenblätter erfolgt.

4. Verfahren nach einem der Ansprüche 1 bis 3, wobei beim Konditionieren ein gepulstes elektrisches Feld angelegt wird, was einen Zellaufschluss bewirkt.

5. Verfahren nach einem der Ansprüche 1 bis 4, wobei beim Konditionieren ein vorbestimmter Aufschlussgrad der Pflanzenblätter eingestellt wird.

6. Verfahren nach einem der Ansprüche 1 bis 5, wobei das Konditionieren die Pflanzenblätter nicht-thermisch aufschließt und die Pflanzenblätter für einen anschließenden Verarbeitungsschritt des Welkens, mechanischen Zellaufschlussverfahrens, Fermentierens und/oder Trocknens vorbereitet.

7. Verfahren nach einem der Ansprüche 1 bis 6, wobei das mechanische Zellaufschlussverfahren ein Zerkleinern, Tumbeln, Brechen oder Rollen, vorzugsweise ein Rollen der Pflanzenblätter ist.

8. Verfahren zum Herstellen eines fermentierten Produktes aus gepflückten Pflanzenblättern umfassend die Schritte:
- optional ein Fermentieren der Pflanzenblätter, und
- Trocknen der Pflanzenblätter,
wobei die Pflanzenblätter ferner gemäß dem Verfahren nach einem der Ansprüche 1 bis 7 konditioniert werden.

9. Verfahren nach Anspruch 8, wobei der Schritt des Konditionierens den Schritt des Welkens teilweise ersetzt.

10. Verfahren nach einem der Ansprüche 8 bis 9, wobei die Pflanzenblätter weniger als 8 Stunden welken, und/oder wobei die Pflanzenblätter weniger als 30 Minuten, vorzugsweise weniger als 15 Minuten und besonders bevorzugt weniger als 10 Minuten dem mechanischen Zellaufschlussverfahren unterzogen werden.

11. Verfahren nach einem der Ansprüche 8 bis 10, wobei die Pflanzenblätter weniger als 60 Minuten, vorzugsweise weniger als 40 Minuten und besonders bevorzugt weniger als 20 Minuten fermentiert werden, und/oder wobei die Pflanzenblätter weniger als 30 Minuten, vorzugsweise weniger als 15 Minuten und besonders bevorzugt weniger als 10 Minuten getrocknet werden.

## Claims

1. Method for processing plant leaves, in particular in the context of producing a fermented product, comprising the steps of:
- withering said plant leaves, and
- mechanical cell disruption of said plant leaves,
wherein said plant leaves are conditioned prior to or during the step of withering by applying a non-thermally acting electric field.

2. Method according to claim 1, wherein said plant leaves are tea leaves, spice leaves, herb leaves or tobacco leaves.

3. Method according to claim 1 or 2, wherein an electric field of 0.1 kV/cm to 10 kV/cm is applied during conditioning and/or where an energy input of 0.1 kJ/kg to 10 kJ/kg is effected into said plant leaves during conditioning.

4. Method according to any one of the claims 1 to 3, wherein a pulsed electric field is applied during conditioning which causes cell disruption.

5. Method according to any one of the claims 1 to 4, wherein a predetermined degree of disruption of said plant leaves is adjusted during conditioning.

6. Method according to any one of the claims 1 to 5, wherein conditioning disrupts said plant leaves non-thermally and prepares said plant leaves for a subsequent processing step of withering, mechanical cell disruption, fermenting and/or drying.

7. Method according to any one of the claims 1 to 6, wherein the mechanical cell disruption is shredding, tumbling, breaking or rolling, in particular rolling of the plant leaves.

8. Method for producing a fermented product from plucked plant leaves comprising the steps of:
- optionally fermenting said plant leaves, and
- drying said plant leaves,
wherein said plant leaves are further conditioned according to the method of any one of the claims 1 to 7.

9. Method according to claim 8, wherein the step of conditioning replaces in part the step of withering.

10. Method according to any one of the claims 8 to 9, wherein said plant leaves wither less than 8 hours, and/or wherein said plant leaves are mechanically disrupted less than 30 minutes, preferably less than 15 minutes and most preferably less than 10 minutes.

11. Method according to any one of the claims 8 to 10, wherein said plant leaves are fermented less than 60 minutes, preferably less than 40 minutes and most preferably less than 20 minutes, and/or wherein said plant leaves are dried less than 30 minutes, preferably less than 15 minutes and most preferably less than 10 minutes.

## Revendications

1. Procédé de traitement de feuilles de plantes, en particulier dans le cadre de la fabrication d'un produit fermenté, comprenant les étapes suivantes :
- flétrissage des feuilles de plantes, et
- désintégration cellulaire mécanique des feuilles de plantes,
dans lequel les feuilles de plantes sont conditionnées par l'application d'un champ électrique non thermique avant et/ou pendant l'étape de flétrissage.

2. Procédé selon la revendication 1, dans lequel les feuilles de plantes sont des feuilles de thé, des feuilles d'épices, des feuilles d'herbes ou des feuilles de tabac.

3. Procédé selon la revendication 1 ou 2, dans lequel un champ électrique de 0,1 kV/cm à 10 kV/cm est appliqué pendant le conditionnement et/ou dans lequel un apport d'énergie de 0,1 kJ/kg à 10k J/kg est fourni dans les feuilles de plantes.

4. Procédé selon l'une des revendications 1 à 3, dans lequel un champ électrique pulsé est appliqué pendant le conditionnement, ce qui provoque une désintégration cellulaire.

5. Procédé selon l'une des revendications 1 à 4, dans lequel un degré de désintégration prédéterminé des feuilles de plantes est fixé pendant le conditionnement.

6. Procédé selon l'une des revendications 1 à 5, dans lequel le conditionnement désintègre les feuilles de plantes de manière non thermique et prépare les feuilles de plantes pour une étape de traitement ultérieure de flétrissage, de désintégration cellulaire mécanique, de fermentation et/ou de séchage.

7. Procédé selon l'une des revendications 1 à 6, dans lequel le procédé de désintégration cellulaire mécanique consiste en un broyage, un roulage, une rupture ou un roulage, et de préférence un roulage des feuilles de plantes.

8. Procédé de fabrication d'un produit fermenté à partir de feuilles de plantes cueillies, comprenant les étapes suivantes :
- facultativement, fermentation des feuilles de plantes, et
- séchage des feuilles de plantes,
dans lequel les feuilles de plantes sont en outre conditionnées selon le procédé de l'une des revendications 1 à 7.

9. Procédé selon la revendication 8, dans lequel l'étape de conditionnement remplace partiellement l'étape de flétrissage.

10. Procédé selon l'une des revendications 8 et 9, dans lequel les feuilles de plantes flétrissent pendant moins de 8 heures, et/ou dans lequel les feuilles de plantes sont soumises au processus de désintégration cellulaire mécanique pendant moins de 30 minutes, de préférence pendant moins de 15 minutes, et particulièrement de préférence pendant moins de 10 minutes.

11. Procédé selon l'une des revendications 8 à 10, dans lequel les feuilles de plantes sont fermentées pendant moins de 60 minutes, de préférence pendant moins de 40 minutes, et particulièrement de préférence pendant moins de 20 minutes, et/ou dans lequel les feuilles de plantes sont séchées pendant moins de 30 minutes, de préférence pendant moins de 15 minutes, et particulièrement de préférence pendant moins de 10 minutes.
